# EUROPEAN PATENT APPLICATION

(11) **EP 4 800 913 A1**
(43) Date of publication of application: **02.09.2026**
(21) Application number: 23956716.7
(22) Date of filing: 23.10.2023
(51) Int. Cl.: H02P 9/00

(54) **SHORT CIRCUIT DETECTION DEVICE FOR TURBINE GENERATOR, AND SHORT CIRCUIT DETECTION METHOD**

(71) Applicant: Mitsubishi Generator Co., Ltd., Kobe City, Hyogo 652-8555 (JP)
(72) Inventor: KAKIMOTO, Tadaaki, Tokyo 100-8332 (JP); TONOSU, Shigeki, Tokyo 100-8332 (JP); MORITA, Tetsuji, Tokyo 100-8332 (JP)
(74) Representative: Witte, Weller & Partner Patentanwälte mbB
(86) International application number: PCT/JP2023/038121
(87) International publication number: WO 2025/088657

(57) **Abstract**

A short circuit detection device for a turbine generator comprises: an actual field current acquisition unit for acquiring a measurement value of a field current flowing through a field winding wound on a rotor of the turbine generator; an upon-measurement operation condition acquisition unit for acquiring an upon-measurement operation parameter value as a state quantity of at least one operation parameter indicating an operation condition of the turbine generator, the state quantity being obtained upon measurement of the field current; a reference field current acquisition unit for acquiring a reference value of the field current based on the acquired upon-measurement operation parameter value and a model indicating a relationship between the state quantity of the at least one operation parameter and a magnitude of the field current; and an inter-layer short circuit determination unit configured to determine, when a difference amount between the reference value of the field current and the measurement value of the field current is larger than a first determination threshold value, that an inter-layer short circuit has occurred in the field winding.

## Description

### TECHNICAL FIELD

The present disclosure relates to a short circuit detection device and a short circuit detection method for a turbine generator that allow detection of a short circuit of a field winding disposed on a rotor of the turbine generator.

### BACKGROUND ART

In Patent Document 1, an inter-layer short circuit is detected based on a change in the impedance of a field winding disposed on a rotor of a brushless excited synchronous machine.

### CITATION LIST

### PATENT DOCUMENT

Patent Document 1: Japanese Laid-Open Patent Publication No. 2017-139860

### SUMMARY OF THE INVENTION

### PROBLEM TO BE SOLVED BY THE INVENTION

It is preferable to more accurately detect such a short circuit of a field winding.

An object of the present disclosure is to provide a short circuit detection device and a short circuit detection method for a turbine generator that allow more accurate determination as to whether a short circuit has occurred.

### MEANS TO SOLVE THE PROBLEM

A short circuit detection device for a turbine generator according to at least one embodiment of the present disclosure comprises:
an actual field current acquisition unit for acquiring a measurement value of a field current flowing through a field winding wound on a rotor of the turbine generator;
an upon-measurement operation condition acquisition unit for acquiring an upon-measurement operation parameter value as a state quantity of at least one operation parameter indicating an operation condition of the turbine generator, the state quantity being obtained upon measurement of the field current;
a reference field current acquisition unit for acquiring a reference value of the field current based on the acquired upon-measurement operation parameter value and a model indicating a relationship between the state quantity of the at least one operation parameter and a magnitude of the field current; and
an inter-layer short circuit determination unit configured to determine, when a difference amount between the reference value of the field current and the measurement value of the field current is larger than a first determination threshold value, that an inter-layer short circuit has occurred in the field winding.

A short circuit detection method for a turbine generator according to at least one embodiment of the present disclosure comprises:
an actual field current acquisition step of acquiring a measurement value of a field current flowing through a field winding wound on a rotor of the turbine generator;
an upon-measurement operation condition acquisition step of acquiring an upon-measurement operation parameter value as a state quantity of at least one operation parameter indicating an operation condition of the turbine generator, the state quantity being obtained upon measurement of the field current;
a reference field current acquisition step of acquiring a reference value of the field current based on the acquired upon-measurement operation parameter value and a model indicating a relationship between the state quantity of the at least one operation parameter and a magnitude of the field current; and
an inter-layer short circuit determination step of determining, when a difference amount between the reference value of the field current and the measurement value of the field current is larger than a first determination threshold value, that an inter-layer short circuit has occurred in the field winding.

### EFFECT OF THE INVENTION

The present disclosure makes it possible to provide a short circuit detection device and a short circuit detection method for a turbine generator that enable more accurate determination as to whether a short circuit has occurred.

### BRIEF DESCRIPTION OF THE DRAWINGS

[FIG. 1] FIG. 1 is a schematic diagram showing an internal configuration of a turbine generator according to an embodiment.
[FIG. 2] FIG. 2 is a schematic cross-sectional view of a rotor core orthogonal to an axial direction according to an embodiment.
[FIG. 3] FIG. 3 is a schematic perspective view of an end portion in the axial direction of a rotor according to an embodiment.
[FIG. 4] FIG. 4 is a schematic diagram showing a short circuit detection device according to an embodiment.
[FIG. 5] FIG. 5 is a simplified graph showing changes, over time, in an actual field current and a reference field current according to an embodiment (with an inter-layer short circuit having occurred).
[FIG. 6] FIG. 6 is a simplified diagram showing a number-of-turns decrease amount data table according to an embodiment.
[FIG. 7] FIG. 7 is a simplified graph showing changes, over time, in the actual field current and the reference field current according to an embodiment (with an inter-slot short circuit having occurred).
[FIG. 8A] FIG. 8A is a simplified diagram of a model according to a first embodiment.
[FIG. 8B] FIG. 8B is a simplified diagram of a model according to a second embodiment.
[FIG. 9] FIG. 9 is a flowchart of short circuit detection processing according to an embodiment.

### DESCRIPTION OF EMBODIMENTS

Hereinafter, several embodiments of the present disclosure will be described with reference to the accompanying drawings. However, dimensions, materials, shapes, relative arrangement, and the like of components described in the embodiments or shown in the drawings are not intended to limit the scope of the present disclosure thereto and are merely explanatory examples.

For example, each of expressions indicating relative or absolute arrangement such as "in a certain direction", "along a certain direction", "parallel", "orthogonal", "center", "concentric", or "coaxial" not only strictly indicates such arrangement but also indicates a state where a relative displacement has occurred with a tolerance or with such an angle or a distance that the same function is obtained.

For example, each of expressions indicating that things are in an equivalent state such as "identical", "equal", and "even" not only indicates a strictly equivalent state but also indicates a state where there is a tolerance or such a difference that the same function is obtained.

For example, each of expressions indicating shapes such as a quadrangular shape and a cylindrical shape not only indicates a shape such as a quadrangular shape or a cylindrical shape in a geometrically strict sense but also indicates a shape including a recess/projection, a chamfered portion, or the like within such a range that the same effect is obtained.

Meanwhile, expressions of "provided with (comprising)", "including", and "having" a constituent are not exclusive expressions excluding presence of another constituent.

Similar constituents will be denoted by the same reference characters, and description thereof may be omitted.

### <Overview of Turbine Generator 1>

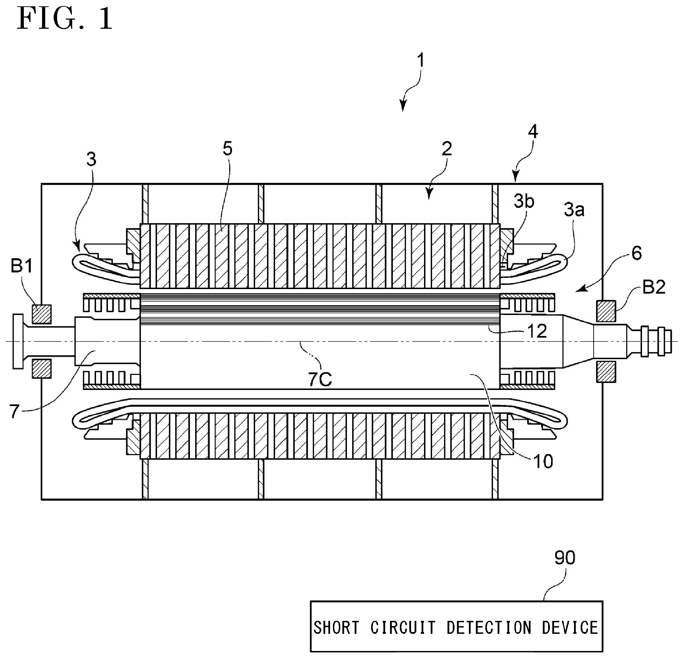

FIG. 1 is a schematic diagram of a turbine generator 1 according to an embodiment of the present disclosure. The turbine generator 1 is provided with: a rotor 6 integrated with a rotor shaft 7; a stator 2 located on an outer circumferential side relative to the rotor 6; and a housing 4 accommodating the rotor 6 and the stator 2. The housing 4 supports the rotor shaft 7 via bearings B1 and B2. In the following description, a direction in which an axial line 7C of the rotor shaft 7 extends is sometimes simply referred to as "axial direction". Also, a circumferential direction and a radial direction about the axial line 7C are sometimes respectively simply referred to as "circumferential direction" and "radial direction". An inner side in the radial direction is a side in a direction toward the axial line 7C, and an outer side in the radial direction is a side in a direction away from the axial line 7C.

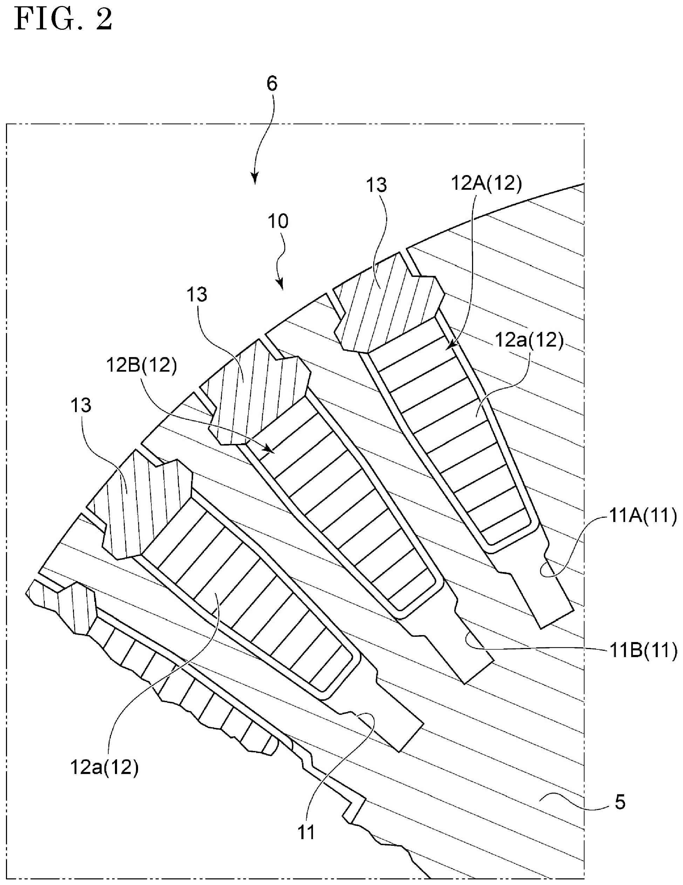

The rotor 6 includes: a rotor core 10 integrated with the rotor shaft 7; a plurality of slots 11 (see FIG. 2) formed in the rotor core 10; and a field winding 12 disposed in each of the plurality of slots 11. The field winding 12 has such a structure as to be wound on the rotor core 10. The stator 2 includes a stator core 5 and a stator coil 3 wound on the stator core 5. The stator coil 3 has: coil ends 3a protruding in the axial direction from the stator core 5; and a lead-out portion 3b connected to an external electrical system (not shown).

The rotor shaft 7 is coupled to a turbine (not shown) such as a gas turbine or a steam turbine. The turbine generator 1 is a synchronous generator, and the operation principle thereof is as follows. When a turbine as a prime mover rotates the rotor 6 obtained by incorporating the field winding 12 to the rotor core 10 integrated with the rotor shaft 7, a field current flowing through the field winding 12 generates a circumferential-direction magnetic flux. The magnetic flux interlinks with the stator coil 3 through rotation of the rotor 6, whereby power is generated. The generated power is supplied via the lead-out portion 3b to the external electrical system (more specifically, a load).

### <Configuration of Rotor 6>

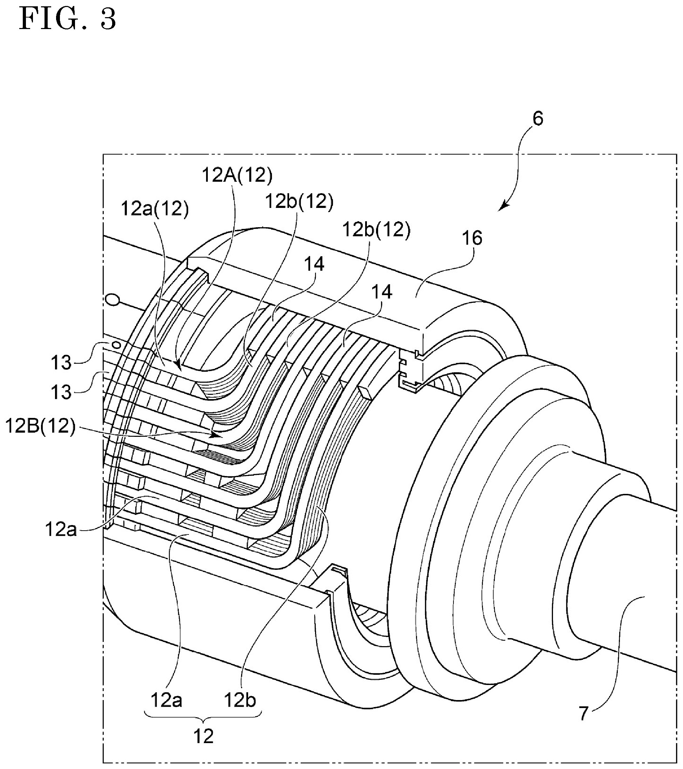

A more detailed configuration of the rotor 6 will be described with reference to FIG. 2 and FIG. 3. FIG. 2 is a schematic cross-sectional view of the rotor core 10 orthogonal to the axial direction according to an embodiment of the present disclosure. FIG. 3 is a schematic perspective view of an end portion in the axial direction of the rotor 6 according to an embodiment of the present disclosure.

The plurality of slots 11 formed in the rotor core 10 are arrayed in the circumferential direction. Each of the slots 11 is a groove extending in the axial direction. Each of the field windings 12 includes, inside a corresponding one of the slots 11, an axially-extending portion 12a extending in the axial direction and a circumferentially-extending portion 12b extending in the circumferential direction. The circumferentially-extending portion 12b is contiguous with a part of the axially-extending portion 12a that protrudes in the axial direction from the slot 11. The circumferentially-extending portion 12b forms an end portion in the axial direction of the field winding 12.

A plurality of the axially-extending portions 12a disposed in the plurality of respective slots 11 are arrayed in the circumferential direction (see FIG. 2). Also, a plurality of the circumferentially-extending portions 12b contiguous with the plurality of respective axially-extending portions 12a are arrayed in the axial direction (see FIG. 3). A spacer 14 formed from an insulation material is disposed between two of the circumferentially-extending portions 12b that are adjacent to each other in the axial direction.

Wedges 13 extending in the axial direction are fitted into the respective slots 11. The wedges 13 cover the axially-extending portions 12a from the outer side in the radial direction and thus prevent the axially-extending portions 12a from coming off from the slots 11 owing to the effect of centrifugal force. Also, the circumferentially-extending portions 12b are covered by a retaining ring 16 provided on an end portion in the axial direction of the rotor shaft 7.

Although not shown in detail, each of the field windings 12 has a structure in which a conductor formed from a metal such as copper has been wound on the rotor core 10. Each of the axially-extending portion 12a and the circumferentially-extending portion 12b of the field winding 12 has a structure in which a plurality of layered parts formed of the wound conductor have been stacked in the radial direction. An insulating member (not shown) is disposed between two of the layered parts that are adjacent to each other in the radial direction. In general, in the case of a two-pole machine, the sum of the numbers of the conductor layers in the respective slots from one pole to the other pole of the rotor is equal to the total number of turns of the field windings 12.

With reference back to FIG. 1, description of the overview of the turbine generator 1 will be continued. During operation of the turbine generator 1, a short circuit might occur in any of the field windings 12. Examples of the short circuit include an inter-layer short circuit. The inter-layer short circuit refers to a short circuit due to contact between at least two of the plurality of layered parts forming the axially-extending portion 12a in a specific one of the slots 11 (see FIG. 2). The turbine generator 1 in the present embodiment is provided with a short circuit detection device 90 for a turbine generator, which has a function of detecting an inter-layer short circuit. The short circuit detection device 90 for a turbine generator is implemented by a controller or a control board. Alternatively, the short circuit detection device 90 for a turbine generator may be implemented by a DCS board forming one of a plurality of control boards. In the following description, the "short circuit detection device 90 for a turbine generator" is sometimes abbreviated as "short circuit detection device 90".

### <Basic Configuration of Short Circuit Detection Device 90>

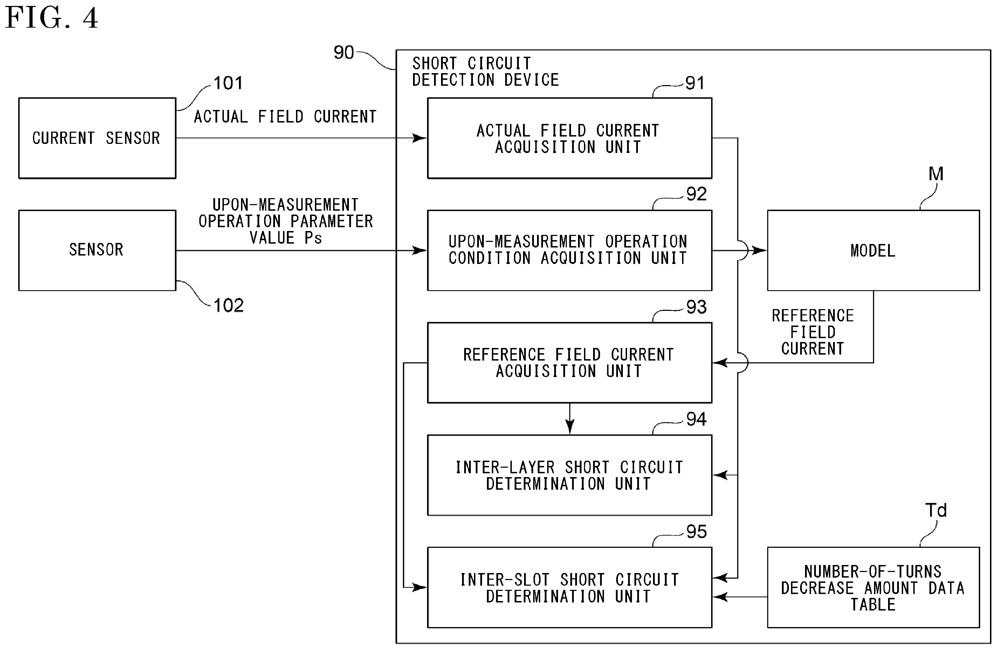

FIG. 4 is a schematic diagram showing the short circuit detection device 90 according to an embodiment of the present disclosure. Prior to description of a basic configuration of the short circuit detection device 90, the principle of detecting an inter-layer short circuit by the short circuit detection device 90 will be described. In the present embodiment, whether an inter-layer short circuit has occurred is determined through comparison between a measurement value (hereinafter, sometimes referred to as "actual field current") of a field current flowing through any of the field windings 12 and a reference value (hereinafter, sometimes referred to as "reference field current") of the field current. The reference field current is a normal value of the field current expected to be acquired as a measurement value upon measurement of the actual field current. More specifically, the reference field current is a field current inferred to actually flow through the field winding 12 in a situation where no inter-layer short circuit has occurred, under an operation condition of the turbine generator 1 upon measurement of the actual field current.

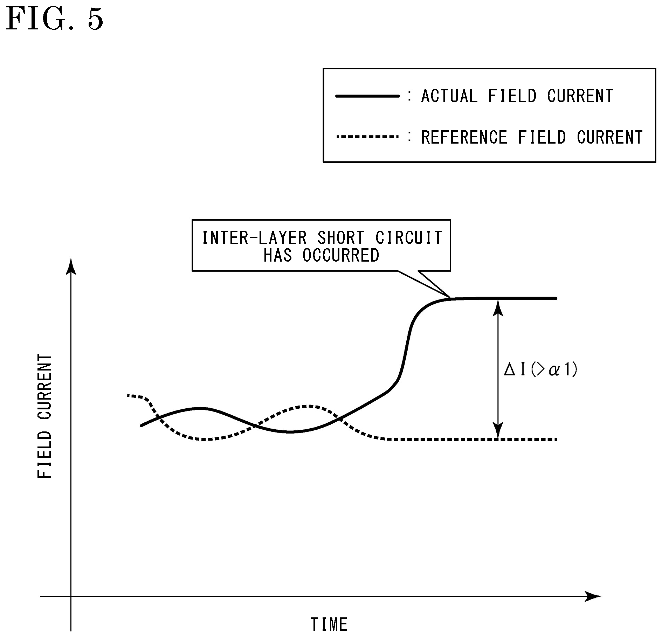

FIG. 5 is a simplified graph showing changes, over time, in the actual field current and the reference field current. When an inter-layer short circuit has occurred upon measurement of the actual field current, a current path on the field winding 12 is shortened, whereby the resistance value of the entirety of the field winding 12 decreases. As a result, the actual field current becomes much higher than the reference field current. In the example in FIG. 5, when a deviation (ΔI) between the actual field current and the reference field current is larger than a first determination threshold value (α1) as a predetermined threshold value, the short circuit detection device 90 determines that an inter-layer short circuit has occurred. ΔI in FIG. 5 merely indicates an example of the difference amount between the actual field current and the reference field current.

A basic configuration of the above short circuit detection device 90 for detecting an inter-layer short circuit will be described. As shown in FIG. 4, the short circuit detection device 90 is provided with an actual field current acquisition unit 91, an upon-measurement operation condition acquisition unit 92, a reference field current acquisition unit 93, and an inter-layer short circuit determination unit 94.

The actual field current acquisition unit 91 is configured to acquire the actual field current through measurement by a current sensor 101. The current sensor 101 is configured to measure a field current flowing through the axially-extending portion 12a disposed in any of the slots 11.

The upon-measurement operation condition acquisition unit 92 is configured to acquire an upon-measurement operation parameter value Ps. The upon-measurement operation parameter value Ps is a state quantity of at least one operation parameter P indicating an operation condition of the turbine generator 1. More specifically, the upon-measurement operation parameter value Ps is a state quantity, of the operation parameter P, obtained upon measurement of the actual field current. The operation parameter P is a physical quantity indicating an operation condition of the turbine generator 1. Examples of the operation parameter P include the active power of the turbine generator 1, the reactive power of the turbine generator 1, the power factor of the turbine generator 1, the output voltage of the lead-out portion 3b, the rotation speed of the rotor shaft 7, and the like. The state quantity of the operation parameter P is a specific value of the operation parameter P and is a value that is variable according to the operation condition of the turbine generator 1. In the present embodiment, the upon-measurement operation parameter value Ps as the state quantity of the operation parameter P is acquired through measurement by at least one sensor 102.

For example, in the case of measuring the active power and the reactive power, the sensor 102 includes: a voltmeter for measuring the output voltage of the lead-out portion 3b; and an ammeter for measuring a current flowing through the lead-out portion 3b. In the case of measuring the rotation speed of the rotor shaft 7, the sensor 102 includes a tachometer for measuring the rotation speed of the rotor shaft 7.

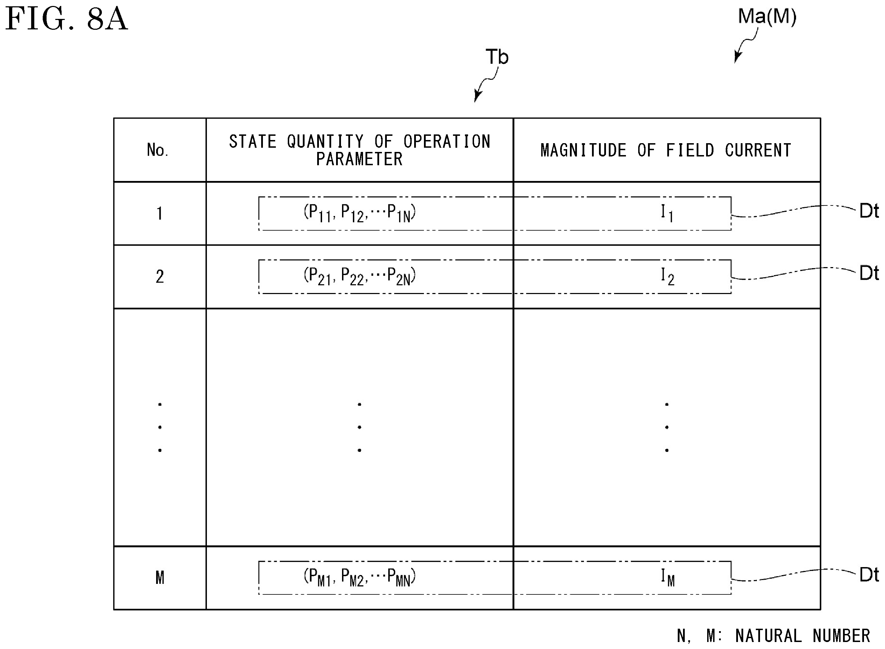

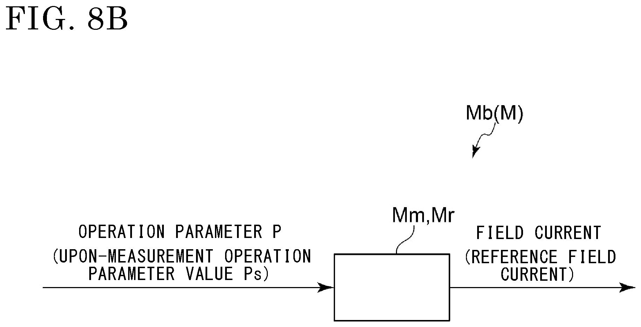

The reference field current acquisition unit 93 is configured to acquire the reference field current. The reference field current is acquired based on the upon-measurement operation parameter value Ps and a model M. The model M in the present embodiment indicates a relationship between the state quantity of the at least one operation parameter P and a magnitude of the field current in a situation where no short circuit has occurred in the field winding 12. By applying the upon-measurement operation parameter value Ps to such a model M, the reference field current as an estimation value is acquired. The model M may be a data table Tb (see FIG. 8A), a machine learning model Mm (see FIG. 8B), or a multiple-regression analysis model Mr (see FIG. 8B). The model M will be described later in detail.

The inter-layer short circuit determination unit 94 is configured to determine, when the difference amount between the reference field current and the actual field current is larger than the first determination threshold value, that an inter-layer short circuit has occurred in the field winding 12. The difference amount may be a deviation between the reference field current and the actual field current or may be a ratio between the reference field current and the actual field current.

When an inter-layer short circuit has occurred, the number of turns of the field winding 12 decreases, whereby the actual field current becomes higher than in a case where no short circuit has occurred. Therefore, whether an inter-layer short circuit has occurred can be determined by comparing the difference amount between the field currents to the first determination threshold value obtained in advance through an experiment, a simulation, or the like. The first determination threshold value may be a fixed value or may be a value that is variable according to the operation condition of the turbine generator 1. In the latter case, the first determination threshold value may be set according to the upon-measurement operation parameter value Ps acquired by the upon-measurement operation condition acquisition unit 92.

In the above configuration, the upon-measurement operation parameter value Ps obtained upon measurement of the field current is applied to the model M, whereby a field current to be obtained as a measurement value when no short circuit has occurred in the field winding 12 is acquired as the reference value. A measurement value of the field current obtained when an inter-layer short circuit has occurred is larger than a measurement value of the field current obtained when no inter-layer short circuit has occurred. Therefore, the inter-layer short circuit determination unit 94 can determine, by comparing the difference amount between the reference field current and the actual field current to the first determination threshold value, whether an inter-layer short circuit has occurred. The inter-layer short circuit determination unit 94 determines, based on the measurement value of the field current to be directly influenced when an inter-layer short circuit has occurred, whether such an inter-layer short circuit has occurred. Thus, whether a short circuit has occurred can be more accurately determined.

### <Additional Constituents of Short Circuit Detection Device 90>

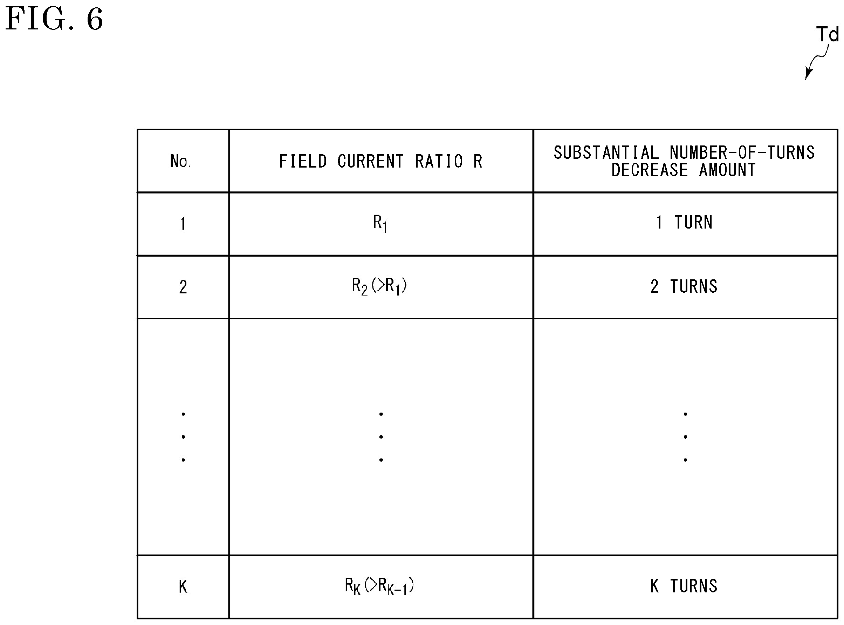

Constituents that may be further provided to the inter-layer short circuit determination unit 94 will be described with reference to FIG. 1, FIG. 4, and FIG. 6. FIG. 6 is a simplified diagram showing a number-of-turns decrease amount data table Td according to an embodiment of the present disclosure.

The inter-layer short circuit determination unit 94 may be configured to identify, when determining that an inter-layer short circuit has occurred, a substantial number-of-turns decrease amount of the field winding 12 due to the inter-layer short circuit. Here, the substantial number-of-turns decrease amount refers to a value indicating the extent to which the number of turns of the field winding 12 at a part thereof through which the field current flows has decreased owing to the inter-layer short circuit. For example, it is assumed that a short circuit has occurred at one location on any of the field windings 12 having a structure in which a coil is wound by 40 turns, and as a result of this short circuit, the total number of turns of the field winding 12 at a part thereof through which the field current flows has decreased from 40 turns to 39 turns. In this case, the substantial number-of-turns decrease amount is one turn.

The substantial number-of-turns decrease amount is identified based on a field current ratio R between the reference field current and the actual field current. The field current ratio R in this example is a value resulting from dividing the actual field current acquired by the actual field current acquisition unit 91 by the reference field current acquired by the reference field current acquisition unit 93.

As the substantial number-of-turns decrease amount becomes larger, the number of turns of the field winding 12 becomes smaller, and thus the actual field current becomes higher. For example, it is assumed that the total number of turns of the field winding 12 at the part thereof through which the field current flows has decreased from 40 turns to 39 turns (in this case, the substantial number-of-turns decrease amount is one turn as described above). Thus, the resistance of the entirety of the field winding 12 obtained after the inter-layer short circuit has occurred becomes about 39/40 times the resistance of the entirety of the field winding 12 obtained before the inter-layer short circuit has occurred. As a result, the actual field current becomes about 40/39 times the actual field current obtained before the inter-layer short circuit has occurred.

Another example is as follows. That is, it is assumed that the total number of turns of the field winding 12 at the part thereof through which the field current flows has decreased from 40 turns to 38 turns as a result of occurrence of short circuits at two locations on the field winding 12 (in this case, the substantial number-of-turns decrease amount is two turns). The resistance of the entirety of the field winding 12 obtained after the inter-layer short circuit has occurred becomes about 38/40 times the resistance of the entirety of the field winding 12 obtained before the inter-layer short circuit has occurred. As a result, the actual field current becomes about 40/38 times the actual field current obtained before the inter-layer short circuit has occurred.

As described above, as the substantial number-of-turns decrease amount becomes larger, the actual field current becomes higher. That is, as the actual field current becomes higher, the field current ratio R becomes higher. In this example, the extent to which the field current ratio R increases each time the substantial number-of-turns decrease amount increases by one turn is identified in advance through an experiment or a simulation. Also, the number-of-turns decrease amount data table Td (see FIG. 6) is created in advance based on the result of the identification. The number-of-turns decrease amount data table Td in this example is stored in a memory of the short circuit detection device 90. In FIG. 6, K represents the total number of turns of the field winding 12.

In the number-of-turns decrease amount data table Td, field current ratios R and substantial number-of-turns decrease amounts are associated with each other. The inter-layer short circuit determination unit 94 acquires any of the field current ratios R based on the actual field current acquired by the actual field current acquisition unit 91 and the reference field current acquired by the reference field current acquisition unit 93. Furthermore, the inter-layer short circuit determination unit 94 identifies a substantial number-of-turns decrease amount corresponding to the acquired field current ratio R in the number-of-turns decrease amount data table Td.

The above first determination threshold value (α1 in FIG. 5) is set so as to enable detection of an inter-layer short circuit even when the substantial number-of-turns decrease amount is one turn. That is, in a case where an actual field current and a reference field current that define R₁ in FIG. 6 are respectively defined as a first actual field current and a first reference field current for convenience sake, α1 is equal to or smaller than a numerical value of "first reference field current×{total number of turns/(total number of turns-1)-1}". Since the first reference field current is a value that is variable according to the operation condition of the generator, α1 is a variable instead of a fixed value.

In the above configuration, the inter-layer short circuit determination unit 94 can identify the substantial number-of-turns decrease amount based on the field current ratio R. The temperature of the field winding is calculated with the resistance value of the field winding being a reference, and thus an operator ascertains that the temperature of the field winding has not been correctly detected. Consequently, the operator can take a more appropriate measure for the turbine generator 1 by, for example, causing an output fluctuation to be more moderate than usual and preventing damage to the field winding that might be caused by an inter-layer short circuit. The field current ratio R may be a value resulting from dividing the reference field current acquired by the reference field current acquisition unit 93 by the actual field current acquisition unit 91 acquired by the actual field current acquisition unit 91. In this case, as the substantial number-of-turns decrease amount becomes larger, the field current ratio R becomes lower. Creation of a number-of-turns decrease amount data table Td in which amounts of the decrease in the field current ratio R are identified makes it possible to obtain the above technical advantage.

Description of the constituents that may be additionally provided to the short circuit detection device 90 will be continued with reference to FIG. 2, FIG. 3, FIG. 4, FIG. 7, and FIG. 8. The short circuit detection device 90 may be configured to detect an inter-slot short circuit. Hereinafter, the inter-slot short circuit will be described. Two of the slots 11 that are adjacent to each other in the circumferential direction are referred to as slots 11A and 11B for convenience sake, and the field windings 12 disposed in the respective slots 11A and 11B are referred to as field windings 12A and 12B for convenience sake. In this case, the inter-slot short circuit refers to a short circuit that occurs between the field windings 12A and 12B. The inter-slot short circuit might occur in the retaining ring 16. More specifically, the inter-slot short circuit might occur between the circumferentially-extending portion 12b as a part of the field winding 12A and the circumferentially-extending portion 12b as a part of the field winding 12B.

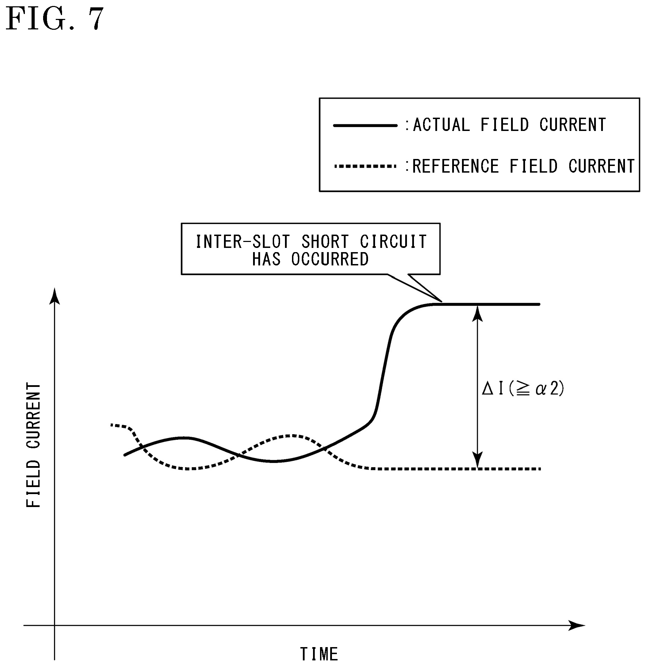

In a case where the inter-slot short circuit has occurred, an actual field current even higher than in a case where the substantial number-of-turns decrease amount is K turns is measured (see FIG. 7). This is because the number of turns of the field windings 12 substantially decreases by the number of the conductor layers in the slot for at least one of the field windings 12A and 12B. That is, a threshold value to be compared to the difference amount between the reference field current and the actual field current in order to determine whether an inter-slot short circuit has occurred is larger than the first determination threshold value (α1 in FIG. 5). In this example, when the difference amount (in the example in FIG. 7, ΔI) is equal to or larger than a second determination threshold value (α2 in FIG. 7) larger than the first determination threshold value, it is determined that an inter-slot short circuit has occurred. The difference amount is not limited to the deviation between the reference field current and the actual field current and may be a ratio between the reference field current and the actual field current. The deviation between the reference field current and the actual field current is a value that is variable according to the operation condition of the turbine generator 1.

As a constituent for detecting an inter-slot short circuit such as one described above, the short circuit detection device 90 presented as an example in FIG. 4 is further provided with an inter-slot short circuit determination unit 95. The inter-slot short circuit determination unit 95 is configured to determine, when the difference amount between the reference field current acquired by the reference field current acquisition unit 93 and the actual field current acquired by the actual field current acquisition unit 91 is larger than the second determination threshold value, that an inter-slot short circuit has occurred.

In the above configuration, when the difference amount between the field currents is equal to or larger than the second determination value larger than the first determination threshold value, it can be determined that an inter-slot short circuit has occurred. Consequently, a short circuit detection device 90 capable of recognizing the type of the short circuit having occurred is realized. The inter-layer short circuit determination unit 94 may be configured to determine, when the difference amount is equal to or larger than the first determination threshold value and smaller than the second determination threshold value, that an inter-layer short circuit has occurred. Consequently, the short circuit detection device 90 can avoid erroneous detection that an inter-layer short circuit having occurred in any of the field windings 12 is an inter-slot short circuit.

### <Specific Configuration (First Embodiment) of Model M>

FIG. 8A is a simplified diagram showing a model Ma (M) according to a first embodiment. The model Ma is a data table Tb, and the data table Tb has a plurality of datasets Dt in each of which the state quantity of the at least one operation parameter P and the magnitude of the field current are associated with each other. Each of the datasets Dt indicates past normal operation data of the turbine generator 1. More specifically, the magnitude of the field current in each of the datasets Dt is a field current measured by the current sensor 101 under an operation condition of the turbine generator 1 defined by the corresponding state quantity of the operation parameter P. At the time of this measurement, no short circuit has occurred in any of the field windings 12. Each of the datasets Dt is created based on measurement results from the sensor 102 and the current sensor 101 while an operator ascertains that no short circuit has occurred in any of the field windings 12.

A process of acquiring the reference field current as an estimation value by applying the upon-measurement operation parameter value Ps to the data table Tb is as follows. The reference field current acquisition unit 93 identifies, from the data table Tb, a dataset Dt including a state quantity of the operation parameter P that can be regarded as being identical to the upon-measurement operation parameter value Ps acquired by the upon-measurement operation condition acquisition unit 92. More specifically, for each of parameter types, a state quantity deviation between the upon-measurement operation parameter value Ps acquired by the upon-measurement operation condition acquisition unit 92 and the state quantity of the operation parameter P included in each of the datasets Dt is identified. When the data table Tb includes a dataset Dt in which each of the state quantity deviations is equal to or smaller than a predetermined value, the field current included in this dataset Dt is acquired as the reference field current.

In a further detailed example, it is assumed that the number of the parameter types of the upon-measurement operation parameter value Ps and the number of the parameter types of the operation parameter P are each three (i.e., N shown in FIG. 8 is assumed to represent 3). In this case, the upon-measurement operation parameter value Ps includes parameter values Pₛ₁, Pₛ₂, and Pₛ₃ (not shown), and the operation parameter P includes P_{1M}, P_{2M}, and P_{3M} (not shown) (M represents any natural number). The upon-measurement operation condition acquisition unit 92 sequentially acquires, for each of the plurality of datasets Dt, three state quantity deviations which are Pₛ₁-P_{1M}, Pₛ₂-P_{2M}, and Pₛ₃-P_{3M}. When a dataset Dt in which each of these three deviations is equal to or smaller than a predetermined value is present, the reference field current acquisition unit 93 acquires, as the reference field current, the magnitude of the field current included in this dataset Dt. The above predetermined value may be a value set for each of the parameter types.

The specific example of the operation parameter P will be supplemented. When the number of the parameter types is three, the operation parameters P may be an active power, a reactive power, and an armature voltage (i.e., the output voltage at the lead-out portion 3b). Alternatively, either one of the active power or the reactive power may be substituted with a power factor. Furthermore, the number of the parameter types may be four, and the rotation speed of the rotor shaft 7 may be further added as an operation parameter P.

In the above configuration, the reference field current acquisition unit 93 can identify, from the data table Tb, a dataset Dt including a state quantity of the operation parameter P that can be regarded as being identical to the acquired upon-measurement operation parameter value Ps, and the reference field current acquisition unit 93 can acquire, as the reference field current, the field current included in the identified dataset Dt. That is, a field current that matches the operation condition obtained upon measurement of the actual field current is acquired as the reference field current from the data table Tb created based on operation records about the turbine generator 1. The reference field current acquired based on any of the operation records has high reliability, whereby whether an inter-layer short circuit has occurred can be more accurately determined.

### <Specific Configuration (Second Embodiment) of Model M>

FIG. 8B is a simplified diagram showing a model Mb (M) according to a second embodiment. The model Mb includes a machine learning model Mm or a multiple-regression analysis model Mr.

The machine learning model Mm is a model in which the state quantity of the at least one operation parameter P serves as an input parameter and in which the magnitude of the field current serves as an output parameter. Training data to be used for creating the machine learning model Mm is created during a rated operation of the turbine generator 1. More specifically, during a rated operation of the turbine generator 1, measurement results from the current sensor 101 and the sensor 102 are acquired at all times, and training data is created (actual field currents included in the training data are measurement values of the field current in a situation where no short circuit has occurred). The machine learning model Mm for which machine learning using such training data is ended makes it possible to, when a state quantity of the at least one operation parameter P is inputted to the machine learning model Mm, output a field current corresponding to this state quantity of the operation parameter P from the machine learning model Mm. That is, the reference field current acquisition unit 93 inputs (i.e., applies) the upon-measurement operation parameter value Ps to the machine learning model Mm, whereby the machine learning model Mm outputs the reference field current.

The multiple-regression analysis model Mr is a model in which the state quantity of the at least one operation parameter P serves as an explanatory variable and in which the magnitude of the field current serves as a response variable. Sample data to be used for creating the multiple-regression analysis model Mr may be created during a rated operation of the turbine generator 1. A procedure of creating the sample data is similar to the procedure of creating the above training data. The multiple-regression analysis model Mr for which such sample data has finished being used defines the relationship between the at least one operation parameter P and the field current by a predetermined relational formula. When a state quantity of the at least one operation parameter P is inputted to the multiple-regression analysis model Mr, a field current corresponding to this state quantity of the operation parameter P is outputted. That is, the reference field current acquisition unit 93 inputs the upon-measurement operation parameter value Ps to the multiple-regression analysis model Mr, whereby the multiple-regression analysis model Mr outputs the reference field current.

In the above configuration, the reference field current acquisition unit 93 acquires the reference field current by inputting the acquired upon-measurement operation parameter value Ps to the machine learning model Mm or the multiple-regression analysis model Mr. Consequently, even in a case where the turbine generator 1 is operated under an operation condition regarding which no operation record has been accumulated, a reference field current under this operation condition can be outputted from the machine learning model Mm or the multiple-regression analysis model Mr. Thus, whether an inter-layer short circuit has occurred can be accurately determined over a wider range of operation conditions.

### <Short Circuit Detection Processing>

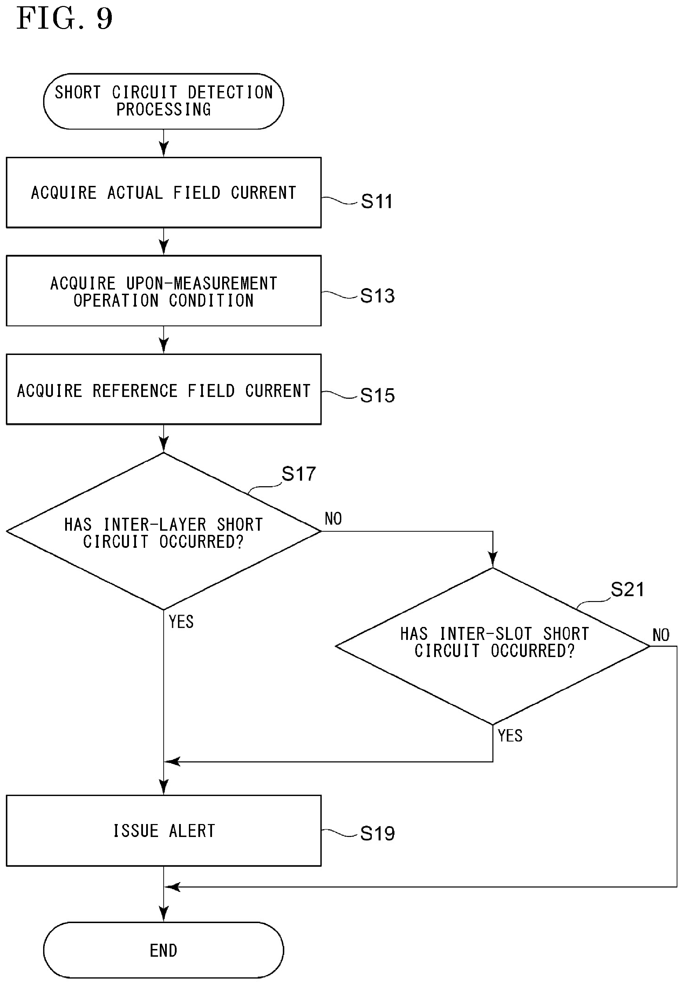

FIG. 9 is a flowchart showing short circuit detection processing according to an embodiment of the present disclosure. The short circuit detection processing is an example of a short circuit detection method for a turbine generator. The short circuit detection processing is performed by a processor of the short circuit detection device 90 (hereinafter, sometimes simply referred to as "processor") reading a program stored in a memory of the short circuit detection device 90. In the following description, "step" is sometimes abbreviated as "S".

First, the processor acquires an actual field current through measurement by the current sensor 101 (S11). Furthermore, the processor acquires, through measurement by the at least one sensor 102, an upon-measurement operation parameter value Ps indicating an operation condition of the turbine generator 1 obtained upon measurement of the actual field current (S13). Then, the processor applies the upon-measurement operation parameter value Ps acquired in S13 to the model M stored in the memory to acquire a reference field current (S15). The processor performing S11 is an example of the actual field current acquisition unit 91, the processor performing S13 is an example of the upon-measurement operation condition acquisition unit 92, and the processor performing S15 is an example of the reference field current acquisition unit 93.

Then, the processor determines, based on the difference amount between the reference field current acquired in S15 and the actual field current acquired in S11, whether an inter-layer short circuit has occurred in any of the field windings 12 (S17). More specifically, when the difference amount is larger than the first determination threshold value and is smaller than the second determination threshold value, the processor determines that an inter-layer short circuit has occurred (S17: YES). In this case, the processor performs alert processing (S19). More specifically, a display signal for displaying information indicating that an inter-layer short circuit has occurred is transmitted to a display as a part of the short circuit detection device 90. The processor making the affirmative determination result in S17 is an example of the inter-layer short circuit determination unit 94. After performing S19, the processor ends the processing.

Meanwhile, when the field current is equal to or smaller than the first determination threshold value or when the field current is equal to or larger than the second determination threshold value, the processor determines that no inter-layer short circuit has occurred (S17: NO). In this case, the processor determines whether an inter-slot short circuit has occurred (S21). More specifically, when the difference amount between the field currents is equal to or larger than the second determination threshold value, the processor determines that an inter-slot short circuit has occurred (S21: YES). In this case, the processor performs alert processing (S19). More specifically, a display signal for displaying information indicating that an inter-slot short circuit has occurred is transmitted to the display of the short circuit detection device 90. The processor making the affirmative determination result in S21 is an example of the inter-slot short circuit determination unit 95. When the field winding 12 is equal to or smaller than the first determination threshold value, the processor determines that no inter-slot short circuit has occurred (S21: NO), and ends the short circuit detection processing.

### <Others>

The above short circuit detection device 90 is implemented by a computer and is provided with the processor, the memory (storage medium), and an external communication interface. The processor is a CPU, a GPU, an MPU, a DSP, a combination thereof, or the like. A processor according to another embodiment may be implemented by an integrated circuit such as a PLD, an ASIC, an FPGA, or an MCU. The memory is configured to allow various types of data to be stored therein in a transitory or non-transitory manner and is implemented by, for example, at least one of a RAM, a ROM, or a flash memory. The processor performs various types of control processing according to a command in a program loaded to the memory.

### <Summary>

The features described in the above several embodiments are understood as follows, for example.
1) A short circuit detection device (90) for a turbine generator according to one embodiment of the present disclosure comprises:
   an actual field current acquisition unit (91) for acquiring a measurement value of a field current flowing through a field winding (12) wound on a rotor (6) of the turbine generator (1);
   an upon-measurement operation condition acquisition unit (92) for acquiring an upon-measurement operation parameter value (Ps) as a state quantity of at least one operation parameter (P) indicating an operation condition of the turbine generator, the state quantity being obtained upon measurement of the field current;
   a reference field current acquisition unit (93) for acquiring a reference value of the field current based on the acquired upon-measurement operation parameter value and a model (M) indicating a relationship between the state quantity of the at least one operation parameter and a magnitude of the field current; and
   an inter-layer short circuit determination unit (94) configured to determine, when a difference amount between the reference value of the field current and the measurement value of the field current is larger than a first determination threshold value, that an inter-layer short circuit has occurred in the field winding.
   In the configuration of the above 1), the upon-measurement operation parameter value obtained upon measurement of the field current is applied to the model, whereby a field current to be obtained as a measurement value when no short circuit has occurred in the field winding is acquired as the reference value. A measurement value of the field current obtained when an inter-layer short circuit has occurred is larger than a measurement value of the field current obtained when no inter-layer short circuit has occurred. Therefore, the inter-layer short circuit determination unit can determine, by comparing the difference amount between the reference value and the measurement value to the first determination threshold value, whether an inter-layer short circuit has occurred. The inter-layer short circuit determination unit determines, based on the measurement value of the field current to be directly influenced when an inter-layer short circuit has occurred, whether such an inter-layer short circuit has occurred. Thus, whether a short circuit has occurred can be more accurately determined.
2) Some of the embodiments are directed to the short circuit detection device for the turbine generator according to the above 1), wherein
   the model includes a data table (Tb) having a plurality of datasets (Dt) in each of which the state quantity of the at least one operation parameter and the magnitude of the field current are associated with each other.
   In the configuration of the above 2), the reference field current acquisition unit can identify, from the data table, a dataset including an operation parameter that can be regarded as being identical to the acquired upon-measurement operation parameter value, and the reference field current acquisition unit can acquire, as the reference value, the field current included in the identified dataset. That is, a field current that matches the operation condition obtained upon measurement of the field current is acquired as the reference value from the data table created based on operation records about the turbine generator. The reference value of the field current acquired based on any of the operation records has high reliability, whereby whether an inter-layer short circuit has occurred can be more accurately determined.
3) Some of the embodiments are directed to the short circuit detection device for the turbine generator according to the above 1), wherein
   the model includes
      a machine learning model (Mm) in which the state quantity of the at least one operation parameter serves as an input parameter and in which the magnitude of the field current serves as an output parameter, or
      a multiple-regression analysis model (Mr) in which the state quantity of the at least one operation parameter serves as an explanatory variable and in which the magnitude of the field current serves as a response variable.
   In the configuration of the above 3), the reference field current acquisition unit acquires the reference value of the field current by inputting the acquired upon-measurement operation parameter value to the machine learning model or the multiple-regression analysis model. Consequently, even in a case where the turbine generator is operated under an operation condition regarding which no operation record has been accumulated, a reference value of the field current under this operation condition can be outputted from the machine learning model or the multiple-regression analysis model. Thus, whether an inter-layer short circuit has occurred can be accurately determined over a wider range of operation conditions.
4) Some of the embodiments are directed to the short circuit detection device for the turbine generator according to any one of the above 1) to 3), wherein
   the inter-layer short circuit determination unit is configured to identify, when determining that the inter-layer short circuit has occurred, an amount by which the number of turns of the field winding at a part thereof through which the field current flows has decreased owing to the inter-layer short circuit, the identification being performed based on a ratio (field current ratio R) between the reference value of the field current and the measurement value of the field current.
   According to a finding by the present inventors, as the total number of turns of the field winding at the part thereof through which the field current flows becomes smaller owing to occurrence of a short circuit, the measurement value of the field current becomes larger. In this respect, in the configuration of the above 4), the substantial number-of-turns decrease amount can be identified based on the ratio between the reference value and the measurement value, whereby an operator can take a more appropriate measure for the turbine generator.
5) Some of the embodiments are directed to the short circuit detection device for the turbine generator according to any one of the above 1) to 4), wherein
   the inter-layer short circuit determination unit is configured to determine, when the difference amount is smaller than a second determination threshold value larger than the first determination threshold value, that the inter-layer short circuit has occurred, and
   the inter-layer short circuit detection device for the turbine generator further comprises an inter-slot short circuit determination unit (95) configured to determine, when the difference amount is equal to or larger than the second determination threshold value, that a short circuit has occurred between the field winding (12A) disposed in a first slot (11A) included in the rotor and the field winding (12B) disposed in a second slot (11B) adjacent to the first slot in a circumferential direction of the rotor.
   According to a finding by the present inventors, when an inter-slot short circuit occurs, a field current higher than in a case where all of the winding parts of a field winding in a single slot undergo short circuits is measured. In this respect, in the configuration of the above 5), when the difference amount between the field currents is equal to or larger than the second determination value larger than the first determination threshold value, it can be determined that a short circuit has occurred between winding coils disposed in two respective slots. Consequently, a short circuit detection device for a turbine generator capable of recognizing the type of the short circuit having occurred is realized.
6) A short circuit detection method for a turbine generator according to one embodiment of the present disclosure comprises:
   an actual field current acquisition step (S11) of acquiring a measurement value of a field current flowing through a field winding (12) wound on a rotor (6) of the turbine generator (1);
   an upon-measurement operation condition acquisition step (S13) of acquiring an upon-measurement operation parameter value (Ps) as a state quantity of at least one operation parameter (P) indicating an operation condition of the turbine generator, the state quantity being obtained upon measurement of the field current;
   a reference field current acquisition step (S15) of acquiring a reference value of the field current based on the acquired upon-measurement operation parameter value and a model (M) indicating a relationship between the state quantity of the at least one operation parameter and a magnitude of the field current; and
   an inter-layer short circuit determination step (S17) of determining, when a difference amount between the reference value of the field current and the measurement value of the field current is larger than a first determination threshold value, that an inter-layer short circuit has occurred in the field winding.

In the configuration of the above 6), the same technical advantages as those in the above 1) are obtained.

### DESCRIPTION OF THE REFERENCE CHARACTERS

1 turbine generator
2 stator
3 stator coil
3a coil end
3b lead-out portion
4 housing
5 stator core
6 rotor
7 rotor shaft
7C axial line
10 rotor core
11, 11A, 11B slot
12, 12A, 12B field winding
12a axially-extending portion
12b circumferentially-extending portion
13 wedge
14 spacer
16 retaining ring
90 short circuit detection device
91 actual field current acquisition unit
92 upon-measurement operation condition acquisition unit
93 reference field current acquisition unit
94 inter-layer short circuit determination unit
95 inter-slot short circuit determination unit
101 current sensor
102 sensor
B1, B2 bearing
Dt dataset
M, Ma, Mb model
Mm machine learning model
Mr multiple-regression analysis model
P operation parameter
Ps upon-measurement operation parameter value
R field current ratio
Tb data table
Td number-of-turns decrease amount data table

## Claims

1. A short circuit detection device for a turbine generator comprising:
an actual field current acquisition unit for acquiring a measurement value of a field current flowing through a field winding wound on a rotor of the turbine generator;
an upon-measurement operation condition acquisition unit for acquiring an upon-measurement operation parameter value as a state quantity of at least one operation parameter indicating an operation condition of the turbine generator, the state quantity being obtained upon measurement of the field current;
a reference field current acquisition unit for acquiring a reference value of the field current based on the acquired upon-measurement operation parameter value and a model indicating a relationship between the state quantity of the at least one operation parameter and a magnitude of the field current; and
an inter-layer short circuit determination unit configured to determine, when a difference amount between the reference value of the field current and the measurement value of the field current is larger than a first determination threshold value, that an inter-layer short circuit has occurred in the field winding.

2. The short circuit detection device for the turbine generator according to claim 1, wherein
the model includes a data table having a plurality of datasets in each of which the state quantity of the at least one operation parameter and the magnitude of the field current are associated with each other.

3. The short circuit detection device for the turbine generator according to claim 1, wherein
the model includes
a machine learning model in which the state quantity of the at least one operation parameter serves as an input parameter and in which the magnitude of the field current serves as an output parameter, or
a multiple-regression analysis model in which the state quantity of the at least one operation parameter serves as an explanatory variable and in which the magnitude of the field current serves as a response variable.

4. The short circuit detection device for the turbine generator according to any one of claims 1 to 3, wherein
the inter-layer short circuit determination unit is configured to identify, when determining that the inter-layer short circuit has occurred, an amount by which the number of turns of the field winding at a part thereof through which the field current flows has decreased owing to the inter-layer short circuit, the identification being performed based on a ratio between the reference value of the field current and the measurement value of the field current.

5. The short circuit detection device for the turbine generator according to any one of claims 1 to 3, wherein
the inter-layer short circuit determination unit is configured to determine, when the difference amount is smaller than a second determination threshold value larger than the first determination threshold value, that the inter-layer short circuit has occurred, and
the inter-layer short circuit detection device for the turbine generator further comprises an inter-slot short circuit determination unit configured to determine, when the difference amount is equal to or larger than the second determination threshold value, that a short circuit has occurred between the field winding disposed in a first slot included in the rotor and the field winding disposed in a second slot adjacent to the first slot in a circumferential direction of the rotor.

6. A short circuit detection method for a turbine generator comprising:
an actual field current acquisition step of acquiring a measurement value of a field current flowing through a field winding wound on a rotor of the turbine generator;
an upon-measurement operation condition acquisition step of acquiring an upon-measurement operation parameter value as a state quantity of at least one operation parameter indicating an operation condition of the turbine generator, the state quantity being obtained upon measurement of the field current;
a reference field current acquisition step of acquiring a reference value of the field current based on the acquired upon-measurement operation parameter value and a model indicating a relationship between the state quantity of the at least one operation parameter and a magnitude of the field current; and
an inter-layer short circuit determination step of determining, when a difference amount between the reference value of the field current and the measurement value of the field current is larger than a first determination threshold value, that an inter-layer short circuit has occurred in the field winding.
